# EUROPEAN PATENT APPLICATION

(11) **EP 2 187 192 A2**
(43) Date of publication of application: **19.05.2010**
(21) Application number: 09252538.5
(22) Date of filing: 02.11.2009
(51) Int. Cl.: G01M 3/36

(54) **Method and apparatus for detecting leaks in food packages**

(30) Priority: 14.11.2008 US 271604
(71) Applicant: Kraft Foods Global Brands LLC, Northfield, IL 60093 (US)
(72) Inventor: Ralph, James A, Madison, Wisconsin 53711 (US)
(74) Representative: Bucks, Teresa Anne

(57) **Abstract**

Leak detector systems for detecting leaks in sealed food packages are disclosed, as well as methods for detecting leaks in sealed food packages. The leak detector system includes advancing a food package to a seal testing station where a portion of the food package is deflected and a deflection characteristic is measured. If the deflection characteristic is greater than a predetermined deflection characteristic limit that a sealed package should undergo while being subjected to the predetermined force, indicating that the package contains leaks, the food package is rejected. Otherwise the food package is advanced from the seal testing station.

## Description

### Field

This disclosure relates generally to leak detection systems, and more specifically to automated systems for detecting leaks in food product packages.

### Background

Many types of food products are packaged in sealed packages including vacuum sealed packages. Various approaches are known to determine whether a package is properly sealed. One approach of detecting leaks in sealed packages involves visual inspection. Another approach involves including a tracer gas in a sealed package and sensing for any quantity of the tracer gas that may escape from the package as described in U.S. Patent No. 3,744,210. Yet another approach, taught in U.S. Patent No. 5,105,654 includes inserting the package in a vacuum chamber that is subsequently evacuated in order to expand the package and determine whether, over time, the expanded package deflates. Each of these methods can slow package lines, and thereby the speed at which packages can be filled, sealed, and inspected.

### Summary

Leak detection systems for detecting leaks in sealed food packages are disclosed, along with methods for determining whether sealed food packages contain leaks. Food packages are advanced in the leak detection system to a seal testing station. At the seal testing station, a deflection characteristic is measured or determined upon deflection of the food package. The measured or determined deflection characteristic is compared to a predetermined deflection characteristic limit that a sealed food package should undergo when subjected to the predetermined force. If the deflection characteristic is greater than the predetermined deflection characteristic limit, indicating that the food package is not sealed, the food package is rejected. If the deflection characteristic is less than the predetermined deflection characteristic limit, indicating that the food package is sealed, the food package is advanced downstream.

The seal testing station may include a deflector for applying a force to the food package to deflect a portion thereof. A first conveyor advances the food package to the seal testing station where the deflector is positioned in a gap formed between the first conveyor and a second conveyor that are arranged end-to-end. An upper restraint is positioned above the deflector and restrains the food package from moving vertically upward so that the force applied by the deflector causes the portion of the food package to deflect rather than causing the entire food package to move upward.

In one approach, the package is stopped from continuing advancing along the first and second conveyors when it is positioned in a testing position with the food package located above the deflector. After the food package is stopped, the deflector is urged upward to engage the food package and to move it vertically upward so that the upper surface of the food package engages the upper restraint, generally restricting the food package from additional upward movement. The deflector continues to apply a force, against the portion of the food package. Under the force applied by the deflector, the portion of the food package may deflect upward. A sensor, also located at the seal testing station measures a deflection characteristic, a value that indicates, either directly or indirectly, the amount of deflection of the food package under the applied force.

In another approach, the food package is continually advanced as it is deflected by the deflector. In this approach the seal testing station can include an upper conveyor with the same direction of travel as the first and second conveyors. The upper conveyor includes an upper restraint roller for engaging the upper surface of the food package to limit the food package from upward vertical movement, but to allow the food package to continue its longitudinal direction of travel along the first and second conveyor belts. The seal testing station also includes a deflector in the form of a roller deflector located in the gap formed between the first and second conveyors. The roller deflector is urged upward toward the food package as it passes thereover, engaging the lower surface of the food package. The roller deflector applies a force to the bottom of the food package forcing it against the upper restraint. Force is continually applied to the food package, which may cause a portion of the food package to deflect or bend upward. The sensor measures the deflection characteristic.

If the measured deflection characteristic exceeds a predetermined deflection characteristic limit, indicating that the food package was deflected beyond the predetermined amount of deflection that a properly sealed container should undergo when subjected to the applied force, the food package can be rejected. If the measured deflection characteristic does not exceed a deflection characteristic limit, indicating that the food package did not deflect beyond the predetermined amount of deflection that a properly sealed container should undergo when subjected to the applied force, the food package should not be rejected and the food package can be advanced on the second conveyor.

### Brief Description of the Drawings

FIG. 1 is perspective schematic view of a seal testing station configured for testing the deflection of a food package while the food package is stationary, showing a deflector in contact with the package but not deflecting the package past a predetermined deflection characteristic limit;

FIG. 2 is a perspective schematic view of the seal testing station of FIG. 1 showing the deflector retracted and the food package advancing past the predetermined deflection characteristic limit;

FIG. 3 is a perspective schematic view of the seal testing station of FIG. 1 showing the deflector in contact with the food package and deflecting the food package;

FIG. 4 is a perspective schematic view of the seal testing station of FIG. 1 showing the deflector retracted and the ejector rejecting the food package;

FIG. 5 is a side cross-sectional elevation view of the seal testing station of FIG. 1 showing the deflector in contact with the food package and deflecting the food package past the predetermined deflection characteristic limit;

FIG. 6 is a side cross-sectional elevation view of the seal testing station of FIG. 1 showing the deflector in contact with the food package but not deflecting the food package past the predetermined deflection characteristic limit;

FIG. 7 is a perspective schematic view of a seal testing station configured for testing the deflection of a food package, while the food package moves downstream;

FIG. 8 is a side cross-sectional elevation view of the seal testing station of FIG. 7 showing a deflector roller in contact with the food package and deflecting the food package past the predetermined deflection characteristic limit; and

FIG. 9 is an exploded perspective view of a food package suitable for testing by the seal testing stations of FIGS. 1 and 7.

### Detailed Description

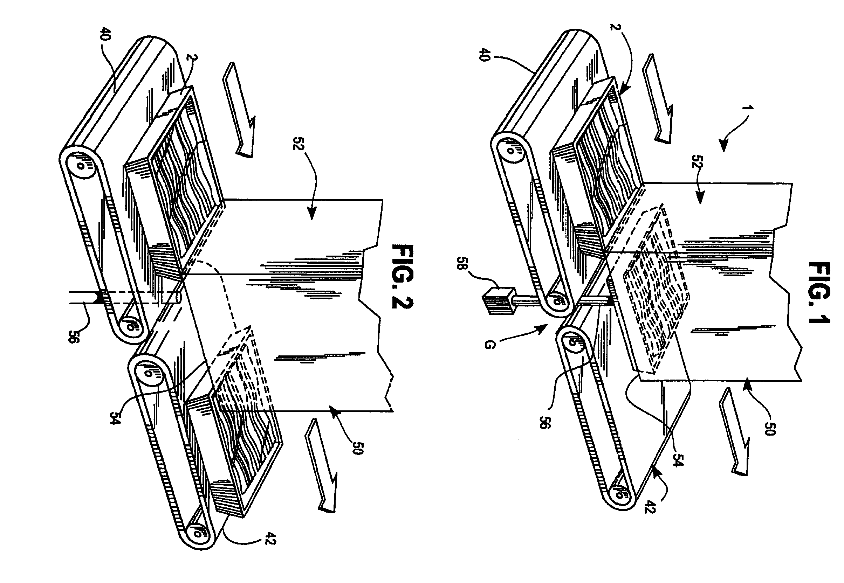

A leak detection system and components thereof are disclosed herein and illustrated in FIGS. 1-8. The leak detection system is advantageously configured to mechanically detect leaks in a sealed food package either continuously or intermittently as food packages are advanced on a conveyor. The leak detection system can detect leaks without the costly and inefficient use of visual inspection or inserting tracer gases into the sealed food package. In addition the leak detection system may be configured to quickly determine whether leaks are present in a food package without having to wait while the food package is placed into a vacuum chamber, the vacuum chamber is subsequently evacuated to inflate the food package, and the food package is inspected over time to determine whether it deflates.

The leak detection system 1 is generally provided for detecting leaks in a sealed food package. A food package 2 is advanced to a seal testing station 50, wherein a lower surface of the food package is deflected by applying a predetermined force thereto, while the food package is simultaneously restrained from moving vertically upward. In one approach, the food package does not advance during the deflecting of the lower portion. In another approach, the food package continues advancing during the deflecting of the lower portion. As the lower portion is deflected by applying a force, an actual amount of deflection is determined. If the amount of deflection exceeds a predetermined amount of deflection limit for a sealed package, the food package 2 is rejected. Otherwise the food package 2 is advanced.

Referring to FIG. 1, the leak detection system 1 includes a first conveyor 40, a second conveyor 42, and a seal testing station 50 located therebetween. The first conveyor 40 advances a food package 2 to the seal testing station 50, where the food package 2 is tested to determine if it contains leaks. The first and second conveyors 40 and 42 are positioned end-to-end with a small gap G formed therebetween.

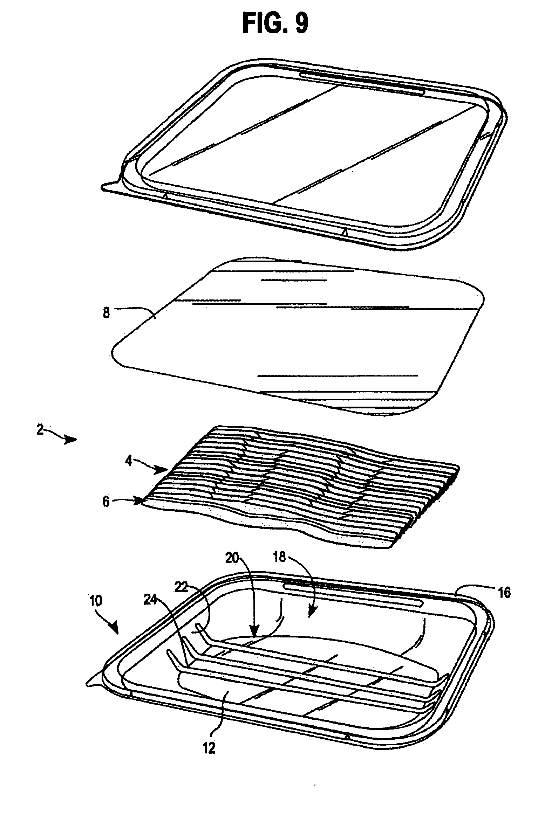

FIG. 9 illustrates an exemplary food package for testing by the present leak detection system, although the leak detection system disclosed and claimed herein can test many different types of sealed food packages for leaks. The package may be of the types disclosed in U.S. Appl. Publ. 2008/0160143, the disclosure of which is hereby incorporated by reference in its entirety. The food package 2, comprising a rigid synthetic plastic package for storing a food product, which includes a tray 10 and a film 8. A food product 4, for example a shingled stack of sliced bacon 6, is carried in a tray 12, and typically rests on a tray base 10 located at the bottom of the tray 12. The tray base 12 is disposed between a pair of opposite longitudinal sidewalls 18 and a pair of opposite endwalls 22. A ridged flange 16 may extend along the upper portions of the sidewalls 18 and endwalls 22 forming a continuous upper edge of the tray 10. In this example, a shingled stack of sliced bacon rests on the tray base and the film is vacuum sealed to portions of the base 10 not covered by the food product 4 such that the food product 4 is tightly held between the tray base 12 and the film 8. In such a package, the base 10 will deflect less when the film 8 is properly sealed to the base 10 for a given applied force.

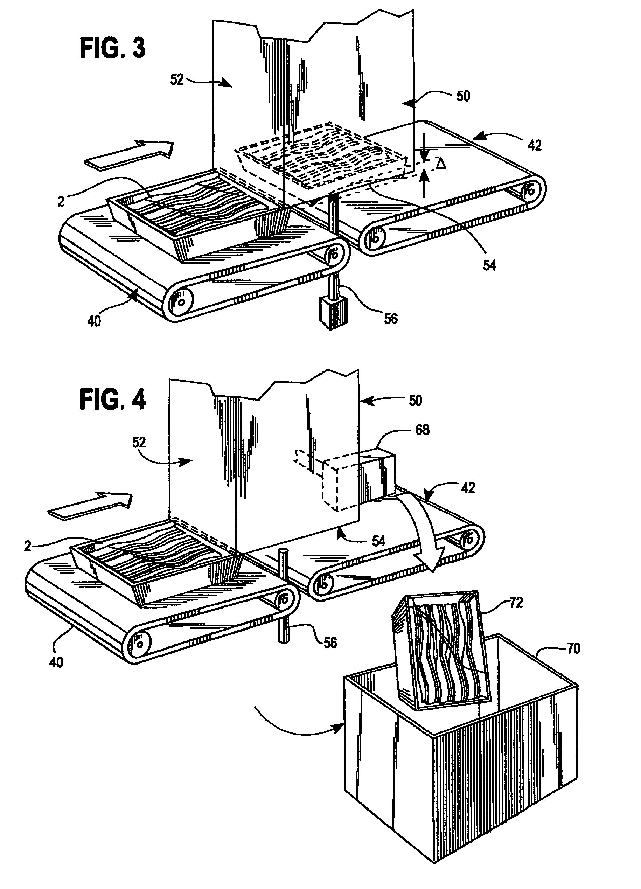

In one approach, the seal testing station 50 includes a deflector 56 for forcibly engaging the food package 2 and an upper restraint 52 to restrict the food package 2 from upward vertical movement. The deflector 56 may be in the form of an elongate rod that is oriented with its length extending vertically between the gap G in this apparatus. The deflector 50 may also be of another shape and configuration that may be positioned in the gap G between the first and second conveyors 40 and 42 such that the deflector 56 is capable of vertical movement between a raised and lowered position. In the lowered position, (FIGS. 2 and 4) the upper surface of the deflector is located below the plane of the upper surfaces of the first and second conveyors 40 and 42. In this position, the deflector 56 will not interfere with the advancement of the food package 2 as it passes over the gap G in order for a front end of the food package to advance onto the second conveyor 42, while a rear portion of the conveyor remains on the first conveyor 40. The deflector 56 remains in the lowered position until actual testing when the food package 2 is deflected by the deflector 56 as described in detail below.

The food package 2 is advanced to the seal testing station 50 on the first conveyor 40 into a testing position. In this example, the food package 2 is in the testing position when its front portion rests on the second conveyor 42 and its rear portion rests on the first conveyor 40 and approximately the center of the food package with respect to both the width and length of the food package is located over the deflector 56 upper surface located in the gap G between the first and second conveyor belts 40 and 42. A sensor senses when the food package 2 is in the testing position and sends a signal to a controller, which in turn stops the food package 2 from advancing from the testing position. The deflector 56 is located between the first and second conveyors 40 and 42 with an upper portion protruding vertically into the gap G located between the first and second conveyors 40 and 42. In one example, a portion of the deflector is in communication with a pneumatic or hydraulic cylinder 58 to urge the deflector 56 to the raised position during deflection and allow the deflector 56 to return to the lowered position after testing.

Once the food package is in the testing position, the cylinder 58 urges the deflector 56 upward such that the deflector upper surface forcibly engages the lower surface of the tray base 12. The force on the food package tray base 12 causes the food package ridged flange 16 to move vertically upward to engage the upper restraint lower surface 54. The upper restraint 52 is positioned longitudinally and laterally with respect to the direction of belt travel so that the upper restraint lower surface 54 is located over the food package ridged flange when the food package 2 is in the testing position. The upper restraint is vertically positioned so that a small clearance is formed between the upper restraint lower surface 54 and the ridged flange 16 when testing is not in progress. In this configuration, the upper restraint 52 will not obstruct the longitudinal movement of the food package 2 as it travels along the first conveyor belt 40 toward the seal testing station 50. Moreover, with only a small clearance between the ridged flange 16 and the upper restraint lower surface 54, upon engagement of the deflector 56 with the tray base 12 lower surface, the food package 2 will only need to move a small distance in the upward vertical direction before the ridged flange 16 engages the upper restraint lower surface to prevent the food package 2 from further movement in the upward vertical direction. Having only a small clearance between the ridged flange and the upper restraint lower surface provides several advantages including a smaller movement of the deflector before it begins to deflect the food package and also less likelihood that the deflector will destabilize the food package and move it away from its longitudinal course of travel down the first and second conveyor belts 40 and 42.

As stated above, once the food package is in the testing position, the deflector 56 moves upward so that its upper surface engages the lower surface of the tray base 12. In this approach, the deflector 56 engages the center portion of the lower surface of the tray base 12 with respect to both the length and width of the food package 2. The upward force causes the food package 2 to move upward such that the ridged flange 16 engages the upper restraint lower surface 54, limiting the food package 2 from further upward vertical movement. The cylinder 58 in communication with the deflector 56 urges the deflector 56 to continue its upward motion.

A sensor measures a deflection characteristic to determine whether the actual amount of deflection of the food package 2 exceeds the predetermined deflection characteristic limit for a properly sealed package. The deflection characteristic is any measureable value that indicates the amount of deflection of the food package 2 under force as it is engaged by the deflector 56. For example, the deflection characteristic may be a measurement of the vertical distance the deflector travels and may be measured by a displacement sensor as the deflector applies a predetermined force. More specifically, the deflector 56 can extend from a housing when the housing is pressurized using a predetermined amount of pressure. A proximity sensor can sense when a metal piece positioned on the deflector 56 or a plunger is adjacent to the sensor. The metal piece can be positioned so that if it is aligned with the sensor, the predetermined pressure limit has been exceeded.

Other ways of measuring or determining displacement can also be used. One alternative is to have an analog linear displacement sensor incorporated into the deflector 56 or plunger. A controller associated with the displacement sensor can be programmed to indicate when the determined level from the displacement sensor exceeds a predetermined limit. The deflection characteristic may alternatively be a measurement of the pressure within the cylinder 58, which may reduce as the volume of the cylinder 58 increases with vertical movement of the deflector 56 after a known quantity of pressurized gas or fluid is inserted into the cylinder 58. Yet another alternative would be the use of a strain gauge or load cell for sensing the amount of resistance the deflector 56 encounters.

The force that is applied by the deflector 56 against the food package 2 should be sufficiently great so that, at least in the case of a package that is not properly sealed, after the ridged flange 16 engages the upper restraint lower surface, the deflector continues its vertical upward movement so that the tray base 12 is deflected and bends upward at the point of contact between the deflector 56 and the tray base 12. Thus the tray base 12, at least at the contact point, is deflected by a distance Δ. The sensor 58 indicates to the controller when a deflection characteristic limit has been exceeded.

The deflection characteristic limit is a value that can be determined in advance of testing that indicates the maximum or desired amount of deflection that a properly sealed food package 2 should undergo when placed under the force. The deflection characteristic limit may be determined from empirical data for the same type of food package 2 containing the same food product 4 under substantially the same environmental conditions. Depending on the specific variable that the deflection characteristic comprises, the deflection characteristic limit may the minimum or maximum acceptable value of the deflection characteristic. For example, if the deflection characteristic measures the actual distance the deflector 56 travels, the deflection characteristic limit can be the maximum distance the deflector can travel before the food package 2 being tested is determined to be not properly sealed. Alternatively, if the deflection characteristic measures the amount of pressure remaining in the cylinder 58, the greater distance the deflector travels will result in a lower pressure measurement, and thus the deflection characteristic limit will be the minimum amount of pressure that may remain in the cylinder before the food package 2 being tested is considered a leaker. For ease of discussion, hereafter, statements referring to the deflection characteristic limit being exceeded, shall mean that the deflection characteristic has either increased or decreased past the deflection characteristic limit into the range where the food package 2 is considered a leaker.

It has been found that a food package 2 that contains holes or leaks deflects more under a force than a properly sealed food package 2, thus indicating that packages that deflect more than the predetermined amount of deflection contain leaks. For example, three food packages 2 were tested by applying a force of 500g to the tray base 12 of the food packages 2 containing bacon at 31.9 ° F. The two food packages 2 that were known to be properly sealed underwent no deflection. The one food package 2 that was known to not be properly sealed underwent deflection of 1/4 inch. The amount of deflection of a food package 2 may also depend on other variables such as the temperature of the food package 2 or the amount of time that the food package has been sealed. For example, two known sealed food packages 2 were tested by applying a 500g force to the tray base 12. A food package 2 at 31.9 ° F did not deflect at all. A separate food package 2 at 40.3 °F deflected 1/4 inch. Thus, testing is typically conducted on food packages 2 at a constant temperature, so that variations in food product 4 or food package 2 temperatures do not produce inaccurate results of whether a food package 2 is properly sealed. The predetermined amount of deflection should be the maximum amount of deflection that a properly sealed food package should have, or a safe amount of deflection that a properly sealed food package should have after taking into account possible testing errors and slight variations in food package and product properties as well as variations in environmental conditions. Thus the deflection characteristic limit should be the maximum or minimum value of the deflection characteristic that indicates that the food package has deflected beyond the predetermined amount of deflection.

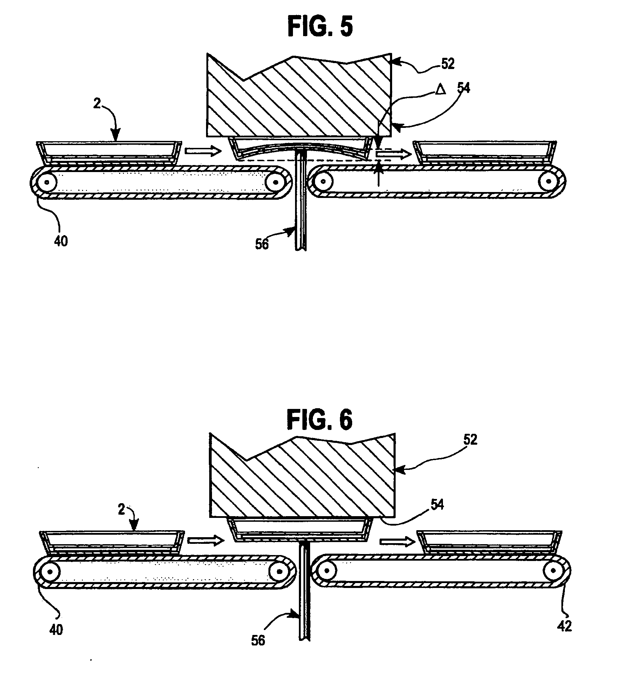

The controller determines whether the deflection characteristic exceeds the deflection characteristic limit. If the deflection characteristic exceeds the deflection characteristic limit, indicating that the food package 2 is not properly sealed, the controller will send a signal to reject the food package. In one approach an ejector rejects the food package 2 from the first and second conveyors such that the rejected package 72 falls into a reject collection container 70 (FIG. 4). If the deflection characteristic does not exceed the deflection characteristic limit (FIGS. 1 and 6), indicating that the food package is properly sealed, the ejector will not reject the food package 2, and the food package 2 will be advanced downstream along the second conveyor 42. In this example, a rejected package 72 is collected manually from the reject collection container 70 and placed upstream where it is resealed, subsequently returning to the leak detection system 1 to determine if it contains any leaks after being resealed. A food package 2 that does not have a deflection characteristic that exceeds the deflection characteristic limit will continue downstream on the second conveyor where any additional stages of packaging will be completed and the food package will be prepared for distribution.

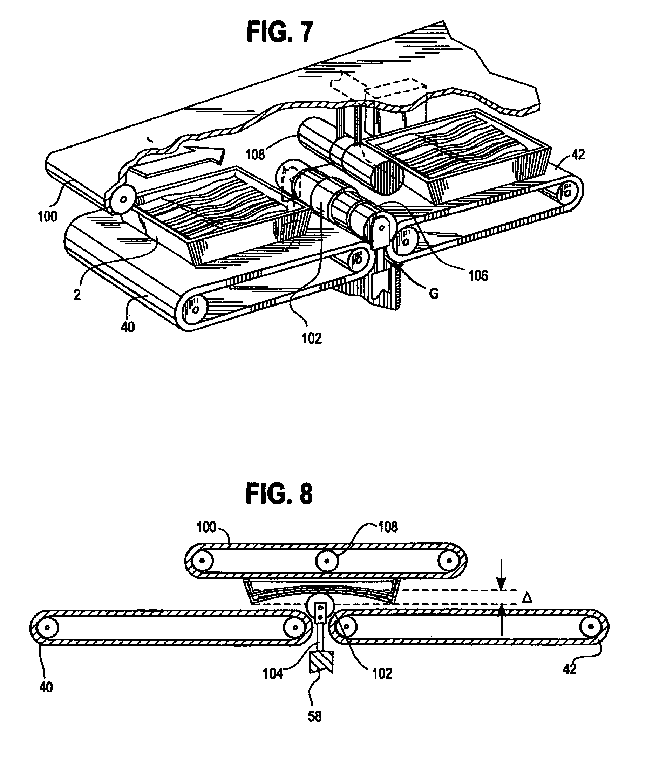

FIGS. 7 and 8 illustrate another approach of the leak detection system 1. According to this approach, the leak detection system 1 includes first and second conveyors 40 and 42 that are positioned end-to-end, forming a gap G therebetween. The first conveyor 40 advances a food package 2 for testing at the seal testing station 50. In this approach, the seal testing station 50 also includes an upper conveyor 100, extending over the gap G at the seal testing station 50. The upper conveyor 100 is positioned to run generally parallel to the first and second conveyors 40 and 42 and have the same longitudinal direction of belt travel. The upper conveyor 100 is positioned vertically above the first and second conveyors 40 and 42 so that as the food package travels along the first conveyor 42 the flanged ridge of the food package 16 may lightly contact the upper conveyor 100 lower surface or pass under the upper conveyor 100 lower surface so there is a small tolerance between the upper conveyor and the flanged ridge 16. In this respect, the upper conveyor 100 acts as a guide to gradually move the food package 2 toward and below an upper restraint roller 108 located above the gap G formed between the first and second conveyors 40 and 42.

A deflector roller 102 is positioned in the gap G between the first and second conveyors 40 and 42. The deflector roller 102 is typically an idler type roller with its axis running transverse to the direction of belt travel such that the deflector roller 102 rotates freely as the food package 2 passes thereover engaging the deflector roller 102. However, the deflector roller can also be a driven roller to forcibly advance the food package 2 thereover. Several additional idler rollers 106 may be positioned side-by-side alongside the deflector roller 102 to help guide the food package 2 over the gap G and prevent the a side of the food package 2 from going off-balance and moving up or down relative to the opposite side. This will maintain the food package 2 with its tray base 12 in a relatively horizontal orientation with respect to the plane of conveyor travel.

The deflector roller 102 is disposed on or integral with a deflector connector member 104 that extends vertically downward from the deflector roller 102. The deflector connector member 104 is typically attached to the deflector roller 102 at its axis point by a pin or other type of rotatable connection that allows the deflector roller 102 to rotate freely about its axis. A load cell is disposed on or integral with one of the deflector connector member 104 and the deflector roller 102. The load cell is configured to measure a force applied by the deflector roller 102 against the tray base 12 as the deflector roller 102 engages the lower surface thereof as the food package 2 passes thereover. The deflector connector member 104 is also connected to a hydraulic or pneumatic cylinder 58 configured to urge the deflector connector member 104 and the deflector roller 102 from a lowered position wherein the deflector roller upper roller surface is generally located in the plane of the first and second conveyors 40 and 42 to a raised position wherein the deflector roller engages the lower surface of the base tray 12 as discussed in more detail below.

The seal testing station 50 includes a sensor that detects when a food package 2 is in a testing position. In one approach the food package 2 is in the testing position when the center portion of the tray base 12 with regard to both the length and width of the food package 2 is located approximately above the deflector roller 102. After the food package 2 is advanced on the first conveyor 40 so that its front portion passes onto the second conveyor 42, into the testing position, the sensor detects the position of the food package and provides a signal to a controller which in turn activates the cylinder 58 to urge the deflector connector member 104 upward forcing the deflector roller 102 to forcibly engage the lower surface of the tray base 12 forcing the food package 2 upward.

The seal testing station 50 in this example includes an upper restraint roller 108 disposed in the upper conveyor 100. The upper restraint roller 108 is positioned longitudinally with respect to belt travel approximately above the deflector roller 102 and vertically a distance above the deflector roller 102 approximately equal to or slightly higher than the height of the food package 2 that will be tested. In this configuration, the food package 2 will pass under the upper restraint roller 108 as it passes over the deflection roller located in the gap G between the first and second conveyors 40 and 42. The upper restraint roller 108 has its axis of rotation transverse to the direction of belt travel, and may be an idler type roller that freely rotates allowing the food package 2 to continue downstream as it passes thereunder, or a driven roller that urges the food package 2 downstream as it passes thereunder.

After the food package 2 is advanced to the testing position, the deflector roller 102 is urged upward by the cylinder 58 to engage the lower surface of the tray base 12. The food package 2 is simultaneously lifted by the force applied by the deflector roller 102 causing the ridged flange 16 to engage the upper restraint roller 108, preventing the food package 2 from further movement vertically upward. In this approach, the food package is continuously moved downstream by the first and second conveyors 40 and 42 and the upper conveyor 100 during testing. Thus the food package 2 rolls along the deflector roller 102 as the deflector roller 102 engages the lower surface of the tray base 12.

A sensor determines the deflection characteristic as the food package 2 is deflected under a predetermined force, as described above, and provides the deflection characteristic to a controller. If the deflection characteristic exceeds the deflection characteristic limit, indicating that the food package 2 is not properly sealed, the controller sends a signal to an ejector to reject the food package 2. However, if the deflection characteristic does not exceed the deflection characteristic limit, indicating that the food package 2 is properly sealed, the food package will continue to advance downstream on the second conveyor 42.

From the foregoing, it will be appreciated that methods and apparatus for use in testing food packages to determine whether they are properly sealed are disclosed. However, the disclosure is not limited to the aspects and embodiments described hereinabove, or to any particular embodiments.

## Claims

1. A method of determining whether a food package is sealed, the method comprising:
advancing a food package to a seal testing station;
deflecting a portion of the sealed food package at the seal testing station;
determining a deflection characteristic of the food package during the step of deflecting a portion of the food package; and
comparing the determined deflection characteristic of the food package with a predetermined deflection characteristic limit for a sealed food package.

2. A method of determining whether a food package is sealed in accordance with claim 1, further comprising:
rejecting the food package when the determined deflection characteristic is greater than the predetermined deflection characteristic limit; and
advancing the food package from the pressure sensing station when the determined deflection characteristic is less than the predetermined deflection characteristic limit.

3. A method of determining whether a food package is sealed in accordance with claim 2, wherein the deflecting step further comprises:
applying a force against one of the upper or lower surface of the sealed food package; and
restraining the other of the upper or lower surface of the sealed food package from vertical movement during the step of applying a force against one of the upper or lower surfaces of the sealed food package.

4. A method of determining whether a food package is sealed in accordance with anyone of the preceding claims, further comprising stopping the advancement of the food package at the seal testing station during the steps of deflecting a portion of the sealed food package and determining the deflection characteristic of the food package.

5. A method of determining whether a food package is sealed in accordance with anyone of the preceding claims, further comprising:
advancing the food package to the seal testing station on a conveying surface;
stopping the food package at the seal testing station;
applying a force to the bottom of the food package and lifting the food package toward an upper restraint block;
determining the deflection characteristic using one or more sensors; and
advancing the food package from the seal testing station on a second conveying surface.

6. A method of determining whether a food package is sealed in accordance with anyone of the preceding claims, further comprising continuing the advancement of the food package during the steps of deflecting a portion of the sealed food package and determining the deflection characteristic of the food package.

7. A method of determining whether a food package is sealed in accordance with claim 6, further comprising;
continuing advancing the food package between an upper and lower conveying surface at the seal testing station;
providing the force against the portion of the food package with a roller in one of the upper and lower conveying surfaces; and
restraining the opposite of one of the upper and lower conveying surfaces with a restraining roller in the other of the upper and lower conveying surfaces.

8. An apparatus for determining whether a food package is sealed the apparatus comprising:
a conveying surface for advancing a food package to a seal testing station;
a deflector of the seal testing station for applying a force to the food package;
a sensor for determining a deflection characteristic of the food package; and
a controller for comparing the deflection characteristic with a predetermined deflection characteristic limit for a sealed food package.

9. An apparatus for determining whether a food package is sealed in accordance with claim 8, further comprising:
a contact element of the deflector for deflecting one of a top or bottom surface of the food package; and
a restraint for preventing the other of the top or bottom surface of the food package from moving vertically while the one of the top or bottom surface is in contact with the contact element.

10. An apparatus for determining whether a food package is sealed in accordance with claim 8 or claim 9, further comprising:
an upper conveying surface for continually advancing the food package through the seal testing station; and
a roller of the deflector for deflecting a bottom portion of the food package during continuous advancement of the food package through the seal testing station.

11. An apparatus for determining whether a food package is sealed in accordance with anyone of claims 8 to 10, further comprising:
a second conveying surface for advancing the food package from the seal testing station if the controller determines the deflection characteristic is less than the predetermined deflection characteristic limit for a sealed food package; and
a rejector for rejecting the food package if the controller determines the deflection characteristic is greater than the predetermined deflection characteristic limit for a sealed food package.
